(19) Europäisches Patentamt
European Patent Office
Office européen des brevets

(11) **EP 1 507 101 A1**

(12) **EUROPÄISCHE PATENTANMELDUNG**

(43) Veröffentlichungstag:
**16.02.2005 Patentblatt 2005/07**

(51) Int Cl.$^7$: **F16H 61/00**

(21) Anmeldenummer: **03102534.9**

(22) Anmeldetag: **14.08.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Getrag Ford Transmissions GmbH 50735 Köln (DE)**

(72) Erfinder:
• **Krauss, Christian 50737, Köln (DE)**
• **Eggert, Ulrich 41751, Vierse (DE)**
• **Hegerath, Andreas 50126, Bergheim (DE)**
• **Koerfgen, Harald 50931, Köln (DE)**

(74) Vertreter: **Drömer, Hans-Carsten, Dr.-Ing. et al Ford-Werke Aktiengesellschaft, Patentabteilung NH/DRP, Henry-Ford-Strasse 1 50725 Köln (DE)**

(54) **Vorrichtung und Verfahren zur Regelung des Versorgungsdruckes für ein Getriebe**

(57) Die Erfindung betrifft eine Vorrichtung und ein Verfahren zur Regelung des hydraulischen Versorgungsdruckes ($p_v$) eines Getriebes, insbesondere eines Doppelkupplungsgetriebes. Der Versorgungsdruck ($p_v$) wird dabei immer auf einem möglichst niedrigen Wert gehalten, welcher gerade noch einen sicheren Betrieb des Getriebes gewährleistet. Primär wird der Versorgungsdruck ($p_v$) durch die minimal notwendigen Kupplungsdrucke ($p_{K1}$, $p_{K2}$) festgelegt.

Fig. 2

EP 1 507 101 A1

**EP 1 507 101 A1**

**Beschreibung**

Die Erfindung betrifft eine Vorrichtung und ein Verfahren zur Regelung des hydraulischen Versorgungsdruckes für ein Getriebe mit mindestens einer hydraulisch betätigten Kupplung.

Hydraulisch betätigte Kupplungen sind insbesondere bei Automatikgetrieben und Doppelkupplungsgetrieben von Kraftfahrzeugen anzutreffen. Die Schließkraft dieser Kupplungen und damit das ohne Schlupf übertragbare Drehmoment wird durch den angewendeten Kupplungsdruck bestimmt. Ein Verfahren zur Steuerung des Kupplungsdruckes beim Hochschalten eines derartigen Getriebes ist beispielsweise aus der DE 199 23 090 A1 bekannt. Dieses sowie andere bekannte Verfahren gehen davon aus, dass von einem Ölsystem Hydrauliköl bei einem ausreichend hohen, konstanten Versorgungsdruck bereitgestellt wird. Das Ölsystem enthält in der Regel eine Ölpumpe zur Förderung des Öls und zur Erzeugung des Versorgungsdruckes, welche vom Verbrennungsmotor des Kraftfahrzeuges angetrieben wird. Der Energieverbrauch der Ölpumpe hat dabei einen zum Teil erheblichen Anteil am Kraftstoffverbrauch des Fahrzeuges.

Vor diesem Hintergrund war es Aufgabe der vorliegenden Erfindung, Mittel zur Energieeinsparung in einem Kraftfahrzeug bereitzustellen, das ein Getriebe mit mindestens einer hydraulischen Kupplung enthält.

Diese Aufgabe wird durch ein Verfahren mit den Merkmalen des Anspruchs 1 sowie durch eine Vorrichtung mit den Merkmalen des Anspruchs 9 gelöst. Vorteilhafte Ausgestaltungen sind in den Unteransprüchen enthalten.

Das erfindungsgemäße Verfahren dient der Regelung des Versorgungsdruckes von einem Hydraulikfluid wie insbesondere einem Hydrauliköl für ein Getriebe, wobei das Getriebe mindestens eine hydraulisch betätigte Kupplung aufweist. Das Verfahren ist dadurch gekennzeichnet, dass der für einen Betrieb des Getriebes aktuell mindestens benötigte Versorgungsdruck (im Folgenden "Minimaldruck" genannt) ermittelt wird, und dass der Versorgungsdruck des Hydraulikfluids anschließend zumindest näherungsweise auf den Wert des Minimaldruckes eingestellt wird.

Während der Ausübungsdauer des Verfahrens wird der Versorgungsdruck des Hydraulikfluids somit ständig auf einem möglichst niedrigen Niveau gehalten, welches (unter Einhaltung vorgebbarer Kriterien) gerade zum Betrieb des Getriebes und insbesondere der darin enthaltenen Hydraulikkupplung(en) ausreicht. Dies hat den Vorteil, dass nicht mehr Energie zur Bereitstellung des Versorgungsdruckes eingesetzt werden muss als unbedingt erforderlich, da die von einer Ölpumpe aufgewandte Leistung gleich dem Produkt aus (Versorgungs-)Druck und Volumenstrom ist. Dabei ist zu beachten, dass bei den herkömmlichen hydraulischen Versorgungssystemen Pumpen verwendet werden, deren Liefermenge von der Drehzahl des Verbrennungsmotors abhängt und daher nicht unabhängig einstellbar ist. Eine Reduzierung der Leistungsaufnahme erfordert hier also zwingend eine Mi n-derung des Druckes. Der Kraftstoffverbrauch des Fahrzeuges kann durch das vorgeschlagene Verfahren zum Teil erheblich gesenkt werden. Ein weiterer Vorteil besteht darin, dass die Drücke im Ölsystem bei dem Verfahren näher an den jeweiligen Arbeitspunkten gehalten werden, so dass in der Regel schneller auf Änderungen reagiert werden kann.

Der bei dem Verfahren ermittelte und anschließend eingestellte Minimaldruck wird gemäß einer bevorzugten Ausführung als die Summe aus einem minimalen Kupplungsdruck und einem minimalen Druck für sonstige Getriebeelemente (insbesondere für Ventile) errechnet. Der minimale Kupplungsdruck soll dabei definitionsgemäß gerade noch zum Halten der Kupplung unter den momentanen Betriebsbedingungen und gegebenenfalls unter Beachtung von vorgegebenen Kriterien (siehe unten) ausreichen. Ebenso soll der minimale Druck für die sonstigen Getriebeelemente noch deren Betätigung sicherstellen. Da der Druckbedarf für diese Getriebeelemente jedoch in der Regel nur einen kleinen Anteil ausmacht, kann der entsprechende minimale Druck auch hierfür als eine gegebene Konstante betrachtet werden.

Der vorstehend erwähnte minimale Kupplungsdruck wird seinerseits vorzugsweise als eine Summe aus einem Haltedruck und einem Sonderdruck errechnet. Der Haltedruck soll dabei gerade noch zur schlupffreien Übertragung des zu übertragenden Motormoments ausreichen, wobei das "zu übertragende Motormoment" beim Fahren in einem bestimmten Gang dem vom Motor tatsächlich bereitgestellten Drehmoment und bei einem Schaltvorgang dem voraussichtlich von der Kupplung zu übertragenden Motormoment entspricht. Wenn der Sonderdruck einen kleinen, positiven Wert hat, kann die Kupplung wie ein Stoßfilter wirken, welcher plötzliche Drehmomentanstiege aufgrund eines einsetzenden Schlupfes dämpft.

Der Sonderdruck kann auch gleich Null gewählt werden, so dass der minimale Kupplungsdruck gerade dem Haltedruck entspricht. In diesem Falle wird vorzugsweise eine Schlupfregelung der Kupplung durchgeführt, das heißt die Übertragung des Motormoments findet unter Schlupf statt, wobei die Drehzahldifferenz gemäß einem vorgegebenen Verfahren (insbesondere auf besonders kleine Werte) geregelt wird.

Vorzugsweise ist der Sonderdruck indes ungleich Null und enthält einen auf Änderungen von Motorbetriebsbedingungen vorausschauend reagierenden Anteil. Die Motorbetriebsbedingungen können dabei insbesondere die Gaspedalstellung, der eingelegte Gang und/oder das Motormoment sein. Dies stellt sicher, dass der Versorgungsdruck auch nach Eintreten von Änderungen ein Niveau hat, welches für einen sicheren Betrieb des Getriebes gerade ausreicht.

Gemäß einer anderen Ausgestaltung des Verfahrens enthält der Sonderdruck einen Anteil, welcher der Vorbereitung eines Bremsvorganges dient. Insbesondere kann der Versorgungsdruck abgesenkt werden, um ein möglichst rasches Öffnen der Kupplung zu ermöglichen, wenn sich aufgrund bestimmter Betriebsparameter des Fahrzeuges eine bevorstehende Verzögerung beziehungsweise ein Bremsvorgang abzeichnet.

Bei dem zugrundeliegenden Getriebe kann es sich optional um ein Getriebe mit mindestens zwei Kupplungen ("Doppelkupplungsgetriebe") handeln. In diesem Falle wird der minimale Kupplungsdruck vorteilhafterweise so festgelegt, dass er für den Betrieb aller in Betracht kommenden Kombinationen von aktiven Kupplungen ausreicht. Dabei kann der minimale Kupplungsdruck zum Beispiel zunächst für jede der Kupplungen einzeln bestimmt und dann das Maximum der so ermittelten Werte als der minimale Kupplungsdruck des Getriebes definiert werden.

Gemäß einer bevorzugten Ausführungsform des Verfahrens wird der Versorgungsdruck in Stufen eingestellt. Eine Anpassung des Versorgungsdruckes ist daher nur noch dann erforderlich, wenn der ermittelte Minimaldruck Stufenschwellwerte überschreitet. Die Höhe der vorzugebenden Stufen kann je nach den Betriebsbedingungen des Fahrzeuges variieren und zum Beispiel bei einer Priorität für einen Kraftstoff sparenden Betrieb kleiner sein als bei einer sportlichen Ausgestaltung des Fahrzeugverhaltens.

Die Erfindung betrifft ferner eine Vorrichtung zur Regelung des hydraulischen Versorgungsdruckes für ein Getriebe mit mindestens einer hydraulisch betätigten Kupplung, wobei die Vorrichtung zur Durchführung eines Verfahrens der oben erläuterten Art eingerichtet ist. Das heißt, dass die Vorrichtung insbesondere den für einen Betrieb des Getriebes aktuell benötigten Minimaldruck ermitteln und den Versorgungsdruck zumindest näherungsweise auf diesen Minimaldruck einstellen kann.

Die Vorrichtung ist vorzugsweise mit Sensoren für Betriebsparameter des Fahrzeugs verbunden, um die zur Ermittlung des aktuellen Minimaldruckes erforderlichen Daten zu bekommen. Ferner weist die Vorrichtung vorzugsweise einen Mikroprozessor oder eine vergleichbare Einrichtung zur Datenverarbeitung auf, mit deren Hilfe der Minimaldruck und die Steuerkommandos zur Einstellung eines entsprechenden Versorgungsdruckes berechnet werden können.

Des Weiteren kann die Vorrichtung ein Regelventil enthalten, welches mit dem Versorgungsdruck beaufschlagt ist und welches einen einstellbaren Ansteuerdruck an ein nachgeordnetes Element wie z.B. eine Kupplung weiterleiten kann. Das Regelventil ist dadurch gekennzeichnet, dass es in der Lage ist, den Versorgungsdruck unvermindert zur Kupplung weiterzuleiten. Anders als bei herkömmlichen Regelventilen, bei denen der erzeugbare Ansteuerdruck immer etwas unter dem Versorgungsdruck bleibt, kann somit der Versorgungsdruck maximal ausgenutzt werden. Dies kommt wiederum einer Minimierung des Versorgungsdruckes und damit der Energieersparnis zugute.

Im Folgenden wird die Erfindung mit Hilfe der Figuren beispielhaft erläutert. Es zeigt:

Fig. 1    in einem schematischen Diagramm die Beziehung zwischen dem von einer hydraulische Kupplung übertragbaren Motormoment und dem Kupplungsdruck;

Fig. 2    den zeitlichen Verlauf des Versorgungsdruckes sowie der Kupplungsdrücke an zwei Kupplungen eines Doppelkupplungsgetriebes (oberes Diagramm), des zugehörigen Motormoments und der Gaspedalstellung (mittleres Diagramm), sowie der zugehörigen Motordrehzahl und der Getriebeeingangsdrehzahl (unteres Diagramm);

Fig. 3    die Kennlinie eines erfindungsgemäß verwendeten Regelventils;

Fig. 4    eine erste hydraulische Schaltung mit einem Regelventil gemäß Figur 3;

Fig. 5    eine zweite hydraulische Schaltung mit einem Regelventil gemäß Figur 3;

Fig. 6    eine dritte hydraulische Schaltung mit einem Regelventil gemäß Figur 3.

Nachfolgend soll die Erfindung im Wesentlichen am Beispiel der Ansteuerung eines Doppelkupplungsgetriebes erläutert werden, wenngleich sie hierauf nicht beschränkt ist. Doppelkupplungsgetriebe haben prinzipbedingt im typischen Fahrbetrieb einen drehmomentübertragenden Getriebepfad, wobei die in diesem Pfad befindliche Kupplung primär die benötigte Höhe des Versorgungsdruckes eines Hydrauliköls zum Betrieb des Getriebes bestimmt. Die übrigen Verbraucher wie beispielsweise die Kupplung im drehmomentfreien Getriebepfad, Einrichtungen zur Schmierung und Kühlung des Getriebes sowie Ventil- und Leckageverluste haben demgegenüber typischerweise einen deutlich niedrigeren Druckbedarf. Der zur Übertragung des anliegenden Drehmoments im aktiven Getriebepfad erforderliche Kupplungsdruck legt somit primär das Niveau des benötigten Versorgungsdruckes fest. Weiterhin bedingen verschiedene Randbedingungen zusätzliche Druckanteile, die zum Beispiel einer Übertragungssicherheit oder einer Stoßfilterfunktion dienen und durch die das Systemverhalten beeinflusst wird.

Um den Energieverbrauch der Ölpumpe im Ölsystem zu minimieren, wird angestrebt, den Versorgungsdruck des Ölsystems immer auf einem kleinstmöglichen Niveau zu halten, welches gerade noch einen sicheren Betrieb des Getriebes garantiert.

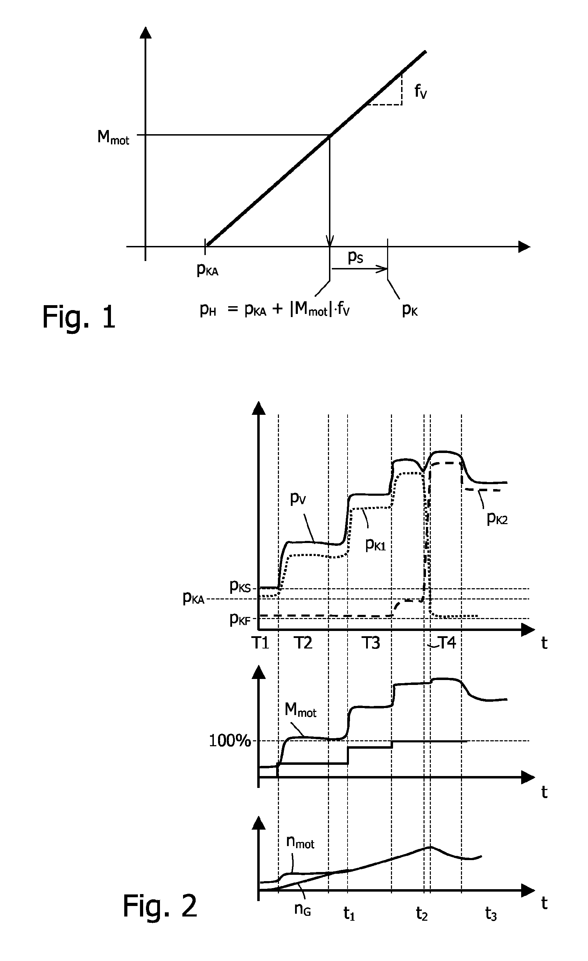

Figur 1 zeigt in einem schematischen Diagramm das mit einer hydraulischen Kupplung in Abhängigkeit vom Kupplungsdruck (horizontale Achse) übertragbare Motormoment (vertikale Achse). Die im Wesentlichen lineare Kennlinie wird dabei durch den Anlegedruck $p_{KA}$, bei welchem die Kupplung gerade anfängt, Drehmoment zu übertragen, sowie durch den Verstärkungsfaktor $f_V$ (Steigung der Kennlinie) festgelegt. Ein bestimmtes Motormoment $M_{Mot}$ kann gerade noch bei einem Haltedruck $p_H$ an der Rutschgrenze der Kupplung übertragen werden. Der minimale Kupplungsdruck $p_K$ liegt definitionsgemäß um den Wert eines Sonderdruckes $p_S$ über (oder unter) $p_H$.

Wenn der Sonderdruck $p_S$ sehr klein gehalten wird, hat die Kupplung nur eine sehr kleine Übertragungssicherheit. Ein leichtes Ansteigen des übertragenen Moments wird dann bewirken, dass die Kupplung zu schlupfen beginnt. Wenn der zusätzliche Sonderdruck $p_S$ im Extremfall auf Null reduziert wird, wird die Kupplung permanent schlupfen. In diesem Fall ist es dann sinnvoll, eine Schlupfregelung zu verwenden, welche die an der Kupplung auftretende Differenzdrehzahl auf einem definierten Niveau hält. Problematisch an einem permanenten Schlupfbetrieb ist allerdings, dass die Differenzdrehzahl nicht beliebig klein gehalten werden kann. Aufgrund des Schlupfes am drehmomentübertragenden Reibelement wird sich hier eine Verlustleistung einstellen (Verlustleistung = Drehmoment * Differenzdrehzahl). Diese wird zumindest einen Teil des durch die Druckabsenkung erzielbaren Einspareffektes wieder zunichte machen. Bevorzugt wird daher die Kupplung ohne Schlupf betrieben und eine sehr kleine zusätzliche Übertragungssicherheit $p_S > 0$ eingestellt.

Kleine Übertragungssicherheiten bewirken auch eine Filterfunktion der Kupplung, indem bei Auftreten von Stößen im Antriebsstrang die Kupplung durchrutscht. Damit werden das Drehmoment beschränkt und Schwingungen in Folge des Durchrutschens gedämpft.

Wird der zusätzliche Druckanteil $p_S$ groß gewählt, wird die Kupplung bei auftretenden Lastwechselstößen geschlossen bleiben und ein Verhalten aufweisen wie zum Beispiel Kupplungen in manuellen Getrieben im normalen Fahrbetrieb (keine Schaltung).

Figur 2 zeigt für einen beispielhaften Fahrvorgang im oberen Diagramm den zeitlichen Verlauf des Betätigungsdruckes $p_{K1}$ an einer ersten Kupplung und des Betätigungsdruckes $p_{K2}$ an einer zweiten Kupplung eines Doppelkupplungsgetriebes. Weiterhin sind der Kupplungsfülldruck $p_{KF}$, der Kupplungsanlegedruck $p_{KA}$ sowie der Schmier- und Kühldruck $p_{KS}$ als während des Fahrens konstante Werte eingetragen. Beim Fahrvorgang können die Phasen des Kriechens T1, des Anfahrens T2, des Fahrens T3 sowie des Schaltens T4 unterschieden werden. Des Weiteren ist im oberen Diagramm der Verlauf des Versorgungsdruckes $p_V$ dargestellt, wobei erkennbar ist, dass dieser immer etwas oberhalb dem Maximum der Kupplungsdrucke $P_{K1}$, $P_{K2}$ liegt.

Nachfolgend erfolgt eine detailliertere Berechnung gemäß den oben dargelegten Prinzipien für den Fall, dass keine Schaltung im Getriebe stattfindet. Dann lässt sich der im hydraulischen System eingestellte Versorgungsdruck $p_V$ wie folgt ausdrücken:

$$p_V = p_K + p_{Ventil} \tag{1}$$

Dabei ist $p_K$ der an der Drehmoment-übertragenden Kupplung benötigte minimale Kupplungsdruck und $p_{Ventil}$ die Druckdifferenz, welche von Kupplungsansteuerungsventilen bei Regelbetrieb verbraucht wird.

Der minimale Kupplungsdruck $p_K$ für die Kupplung auf dem drehmomentübertragenden Pfad lässt sich weiter wie folgt ausdrücken:

$$p_K = p_{KA} + |M_{mot}|*f_V + p_S \tag{2a}$$

Darin bedeutet (vgl. Figur 1):

$p_{KA}$ den Druck am Anlegepunkt, bei dem die Kupplung gerade anfängt, Drehmoment zu übertragen.

$|M_{mot}|$ den Betrag des aktuell vom Verbrennungsmotor erzeugten Drehmoments (Zug oder Schub, z.B. über CAN zur Verfügung gestellt).

$f_V$ den Kupplungsverstärkungsfaktor, d.h. die Steigung der Funktion, welche dem anliegenden Kupplungsdruck das übertragbare Moment der Kupplung zuordnet.

$p_S$ einen zusätzlichen Sonderdruck, der in Abhängigkeit von diversen Randbedingungen wie Fahrsituation, Betriebsart (ECO, Sport, Manuell) und Getriebesystemzustand bestimmt wird.

Da die drehmomentübertragende Kupplung eine bestimmte Kapazität zur Verfügung stellen muss, muss der Versorgungsdruck so eingestellt werden, dass die entsprechende Kupplung dazu in der Lage ist. Zur Bestimmung des Versorgungsdruckes wird mit Hilfe des Drehmomentes des Verbrennungsmotors der Halteoder Basis-Kupplungsdruck $p_K + |M_{mot}| * f_V$ ermittelt. Auf diesen Basisdruck werden dann zusätzliche Anteile über $p_S$ addiert, die eine sichere Übertragung des Drehmomentes bewirken. Dieser Anteil $p_S$ kann je nach Wunsch entsprechend angepasst werden (siehe unten).

Unter der Annahme, dass die beim Doppelkupplungsgetriebe verwendeten Kupplungen in ihrem Drehmomentübertragungsverhalten ungleich sind, weil sie zum Beispiel andere Kupplungsverstärkungsfaktoren haben oder unterschiedliche Drehmomente übertragen müssen, wird im Betrieb immer der Druckbedarf von beiden Kupplungen nach obiger Berechnungsformel ermittelt.

Des Weiteren werden die zum Betrieb der Getriebekühlung und Schmierung benötigte Drücke ermittelt.

Diese Drücke werden verglichen und es wird die größte Druckanforderung gesucht, die den Systemdruck festlegt. Der größte im Vergleich gefundene Druck wird als Eingangsgröße für die Regelung des Systemdruckes verwendet.

Der zusätzliche Druckanteil bzw. der Sonderdruck $p_S$ kann insbesondere die folgenden Anteile aufweisen:

$$p_S = p_{Vorhalteglied} + p_{Störgrößenaufschaltung} + p_{Klassifizierung} + p_{Verzögerung}$$

Zu den hierin enthaltenen Anteilen ist im Einzelnen Folgendes zu sagen:

$p_{Vorhalteglied}$:

Aus der Stellung des Fahrpedals wird durch Ableitung die Betätigungsgeschwindigkeit bzw. der Gradient ermittelt. Ergänzend oder alternativ dazu kann der Gradient des vom Motor erzeugten Drehmomentes verwendet werden. Der Anteil des Vorhaltegliedes wird nun z.B. durch eine Multiplikation des Gradienten mit einem fahrsituationsabhängigen Parameter bestimmt. Als typische Einflussgrößen für die Wahl des Parameters sind dabei Gänge, Schaltungen, Betriebsarten (Sport, Komfort, ...), Getriebezustand (Normal, Kalt, Betriebstemperatur, Heiß, Notlauf, ...), Traktionsbedingungen (Trocken, Nass, Eisglatt) und Verzögerung (Ausrollen, Bremsen, Notbremsung, ABS Bremsung) zu nennen. Dies ergibt:

$$p_{Vorhalteglied} = \text{Fahrpedalgradient} * \text{Parameter1}$$

$$+ \text{Motormomentgradient} * \text{Parameter2}.$$

Typischerweise wird durch $p_{Vorhalteglied}$ sichergestellt, dass man das Druckniveau stark absenken kann und dennoch im Falle von starken Drehmomentanstiegen verhindert, dass die Kupplung durchrutscht. Zu beachten ist, dass die Gradienten auch negativ werden können. $p_{Vorhalteglied}$ wirkt dann reduzierend auf das Druckniveau.

$p_{Störgrößenaufschaltung}$:

Dieser Anteil berücksichtigt eine Streuung des Drehmoments und der Reaktionsgeschwindigkeit des Motorkennfeldes in Abhängigkeit von der Fahrsituation (Kalt/Warm; Teillast/ Volllast).

$P_{Klassifizierung}$:

Dieser Anteil bewirkt eine Verstellung des Versorgungsdruckes in Stufen. Dabei werden die Stufen vorzugsweise wie folgt eingestellt:

- im Teillastbereich enge Stufen (wichtig für Verbrauch und Reaktionsgeschwindigkeit bei Schaltungsvorbereitung, PT1 Verhalten);

- im Volllastbereich große Stufen (aufgrund der Streuung der Motoren in der Großserienfertigung);

- im Economymodus kleine Stufen bis hin zur kontinuierlichen Verstellung, um möglichst viel Verbrauchsvorteil zu erzielen;

- im Sportmodus große Stufen, um Durchgehen der Motordrehzahl bei entsprechender schneller/sportlicher Betätigung des Fahrpedals zu verhindern;

- im Wintermodus kleine Stufen bis hin zur kontinuierlichen Verstellung speziell im Teillastbereich, um schnellstes Öffnen der Kupplung im Falle eines Radabrisses zur Sicherstellung der Fahrstabilität zu erzielen;

- im Selbstlernmodus werden die Stufen aufgeweitet, wenn erkannt wird, dass ein Fahrer hektisch am Fahrpedal agiert (z.B. immer hohe Gradienten).

$p_{Verzögerung}$:

Im Falle einer Notbremsung oder einer Bremsung mit ABS soll ein Absenken des Kupplungsdrucks die Vorbereitung einer Notöffnung der Kupplung bewirken. Wenn der Druck für die Ansteuerung der Kupplung bereits auf ein niedrigeres Niveau oder z.B. bis an die aktuelle Rutschgrenze der Kupplung abgesenkt worden ist, kann eine Öffnung der Kupplung beschleunigt werden.

Im Getriebezustand des Anfahrens oder der Schaltung wird der Versorgungsdruck $p_V$ ebenfalls nach Gleichung (1) berechnet, wobei der minimale Kupplungsdruck für die Kupplung auf den drehmomentübertragenden Pfaden jedoch wie folgt bestimmt wird:

$$P_K = P_{KA} + |M_{mot,anf}|*f_V + p_S \qquad (2b)$$

Hierin bedeutet $M_{mot,anf}$ die aktuelle Drehmomentanforderung an der Kupplung. Analog zu der Vorgehensweise im Fahrbetrieb wird auch während der Fahrzustände Anfahren oder Schalten, bei welchen aktiv beide Kupplungen betrieben werden, der Druckbedarf des Versorgungssystems und der Kupplungen aus dem aktuellen Bedarf ermittelt. Dabei wird nach dem größten Druck gesucht, der sich aus dem Bedarf der Kupplung 1 oder Kupplung 2 oder der Schmierung oder der Kühlung ergibt. Dieser ermittelte Druck wird als Sollwertvorgabe für die Einstellung des Versorgungsdruckes verwendet.

Während der Fahrzustände Anfahren oder Schalten kann der Anteil $p_S$ ergänzende Funktionsanteile haben. Wenn zum Beispiel bekannt ist, dass im Ablauf eines Schaltvorganges zu einem bestimmten Zeitpunkt ein starker Anstieg des Kupplungsmoments zu erwarten ist, wird vorgeschlagen, den Druck des Versorgungssystems zu einem entsprechendem Zeitpunkt vorher bereits anzuheben, um zu verhindern, dass der Versorgungsdruck zu niedrig ist. Dies ist zum Beispiel bei Zurückschaltungen der Fall, bei denen zunächst das an der Kupplung übertragene Drehmoment und damit der Druck sinkt, während der Motor in seiner Drehzahl steigt. Bei Erreichen der Zieldrehzahl, bei der der Motor das Niveau des Ganges erreicht, in welchen rückgeschaltet werden soll, muss dann allerdings das Drehmoment der Kupplung sehr schnell gesteigert werden, um den Motor auf der gewünschten Drehzahl einzufangen und festzuhalten.

Ein anderes Beispiel sind Zugkraft-unterbrechungsbehaftete Schaltungen, die bei Lastschaltgetrieben für bestimmte Schaltungen oder als Notlauffunktion eingesetzt werden. Dabei wird zu Beginn und Ende der Schaltung das übertragene Drehmoment der jeweiligen Kupplung möglichst schnell verändert, um eine möglichst kurze Zeitdauer der Zugkraftunterbrechung zu bewirken. Auch in diesem Fall ist es sinnvoll, mit Hilfe des Sonderfunktionsanteils $p_S$ zur Druckansteuerung der Kupplung und des Versorgungsdruckes durch das Anheben des Druckes vorab entsprechende Reserven zur Verfügung zu stellen.

Das gleiche gilt zu Zeitpunkten, bei welchen eine Schnellbefüllung eines Kupplungssystems durchgeführt werden soll. In diesem Ausnahmefall benötigt das Kupplungssystem innerhalb sehr kurzer Zeiträume (0.1 bis 0.2 sec) im Verhältnis sehr große Mengen Drucköl. Dies kann in bestimmten Betriebssituationen zu einem Einbruch des Versorgungsdruckes führen. Zur Unterdrückung dieses Einbruches des Versorgungsdruckes ist es ebenfalls sinnvoll, zu einem früheren Zeitpunkt den Versorgungsdruck vorab anzuheben.

Eine optionale Adaptions- und Lernstrategie verwendet eine Druckabsenkung und einen Schlupfbetrieb zur Ermittlung von Druck und Reibwert. Dies stellt den optimalen Fall der Absenkung des Versorgungsdruckes dar.

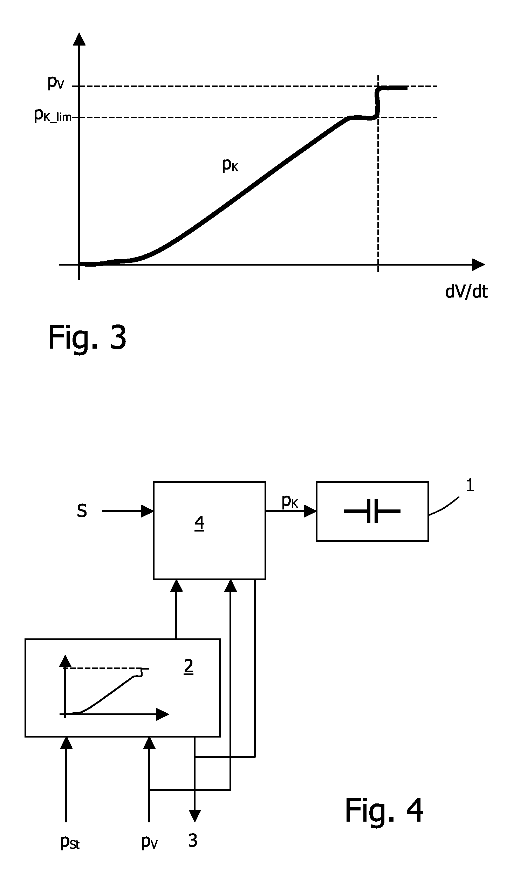

Figur 3 zeigt die Kennlinie eines erfindungsgemäß bevorzugt eingesetzten Regelventils, d. h. den vom Ventil weitergeleiteten Ansteuerdruck $p_K$ in Abhängigkeit vom Volumenstrom dV/dt durch das Ventil. Wie bei herkömmlichen Ventilen steigt der Ansteuerdruck $p_K$ bis zu einem Schwellwert $p_{K\_lim}$ an. Bei herkömmlichen Ventilen erreicht der Ansteuerdruck hier eine Sättigung. Bei dem vorgeschlagenen Ventil findet indes an dieser Stelle ein Sprung statt, und das Regelventil lässt den höheren Versorgungsdruck $p_V$ direkt durch. Auf diese Weise kann der Versorgungsdruck $p_V$

bestmöglich ausgenutzt werden.

Figur 4 zeigt den Einsatz eines Regelventils 2 mit einer derartigen Kennlinie als Vorsteuerventil für eine Kupplung 1. Dem Regelventil 2 sowie einem ihm nachgeschalteten Cut-off-Ventil 4 wird dabei der Versorgungsdruck $p_V$ zugeführt. Weite r-hin empfängt das Regelventil 2 einen Steuerdruck $p_{St}$. Das Cut-off Ventil 4 empfängt ein Steuersignal S (zum Beispiel einen elektrischen Strom) und ist ausgangsseitig mit der Kupplung 1 verbunden. Vom Cut-off-Ventil 4 sowie vom Regelventil 2 führt eine Leitung zu einem Tank 3 (nicht dargestellt) zurück. Die Anordnung kann die Kupplung 1 mit den folgenden Drücken $p_K$ beaufschlagen:

- Ansteuerdruck (Normalbetrieb)
- Versorgungsdruck $p_V$ (Sättigung)
- Cut-off (Entleerung), Defaultstellung.

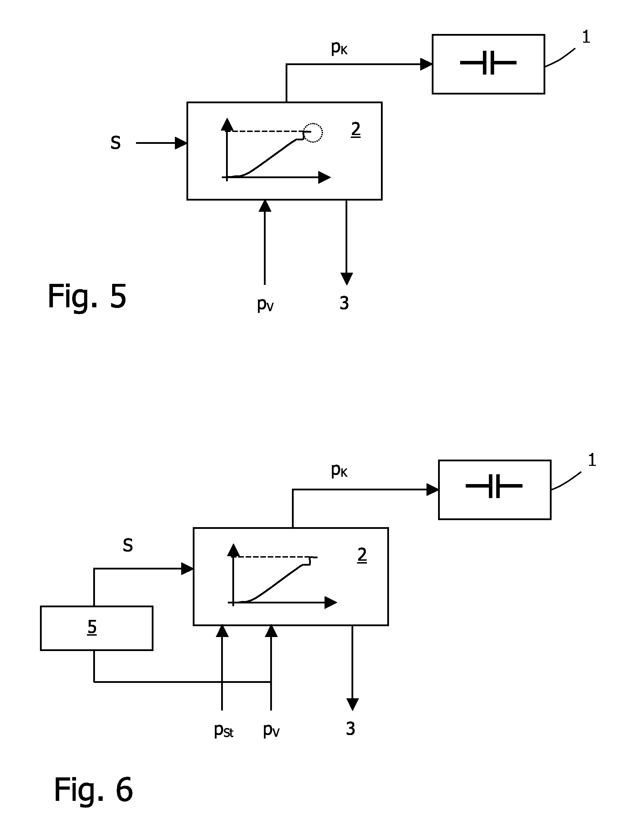

Figur 5 zeigt eine alternative Anordnung, bei der ein Regelventil 2 mit der Kennlinie aus Figur 3 ausgangsseitig unmittelbar die Kupplung 1 beaufschlagt. Das Regelventil 2 empfängt wiederum einen Versorgungsdruck $p_V$ sowie ein zum Beispiel elektrisches Steuersignal S. Weiterhin weist es eine Rückleitung zu einem Tank 3 auf. Im Bereich der Übersteuerung (gestrichelter Kreis in der Kennlinie) wird der Versorgungsdruck $p_V$ von dem Ventil 2 direkt zur Kupplung 1 durchgeschaltet.

Figur 6 zeigt eine Abwandlung der Anordnung von Figur 5, wobei das Steuersignal S für das Regelventil 2 aus einem Schaltventil 5 stammt, welches mit dem Versorgungsdruck $p_V$ beaufschlagt ist. Weiterhin wird das Regelventil 2 von einem Steuerdruck $p_{St}$ gesteuert.

**Patentansprüche**

1. Verfahren zur Regelung des hydraulischen Versorgungsdruckes ($p_V$) für ein Getriebe mit mindestens einer hydraulisch betätigten Kupplung (1),
   **dadurch gekennzeichnet, dass**
   der für einen Betrieb des Getriebes aktuell benötigte Minimaldruck ermittelt wird, und dass der Versorgungsdruck ($p_V$) zumindest näherungsweise auf den Minimaldruck eingestellt wird.

2. Verfahren nach Anspruch 1,
   **dadurch gekennzeichnet, dass**
   der Minimaldruck als Summe aus einem minimalen Kupplungsdruck ($p_K$) und einem minimalen Druck für sonstige Getriebeelemente, insbesondere Ventile, bestimmt wird.

3. Verfahren nach Anspruch 2,
   **dadurch gekennzeichnet, dass**
   der minimale Kupplungsdruck ($p_K$) als Summe aus einem Haltedruck ($p_H$), welcher gerade zur schlupffreien Übertragung des zu übertragenden Motormomentes ($M_{Mot}$) ausreicht, und einem Sonderdruck ($p_S$) bestimmt wird.

4. Verfahren nach Anspruch 3,
   **dadurch gekennzeichnet, dass**
   der Sonderdruck ($p_S$) Null ist und eine Schlupfregelung der Kupplung erfolgt.

5. Verfahren nach Anspruch 3,
   **dadurch gekennzeichnet, dass**
   der Sonderdruck ($p_S$) einen auf Änderungen von Motorbetriebsbedingungen vorausschauend reagierenden Anteil enthält, wobei die Motorbetriebsbedingungen vorzugsweise die Gaspedalstellung, den Gang und/oder das Motormoment umfassen.

6. Verfahren nach Anspruch 3 oder 5,
   **dadurch gekennzeichnet, dass**
   der Sonderdruck ($p_S$) einen Anteil zur Vorbereitung eines Bremsvorganges enthält.

7. Verfahren nach mindestens einem der Ansprüche 1 bis 6,
   **dadurch gekennzeichnet, dass**
   das Getriebe zwei oder mehr Kupplungen (1) enthält, und dass der minimale Kupplungsdruck ($p_K$) so festgelegt wird, dass er für alle in Betracht kommenden Kombinationen von aktiven Kupplungen ausreicht.

**8.** Verfahren nach mindestens einem der Ansprüche 1 bis 7,
**dadurch gekennzeichnet, dass**
der Versorgungsdruck in Stufen eingestellt wird.

**9.** Vorrichtung zur Regelung des hydraulischen Versorgungsdruckes ($p_V$) für ein Getriebe mit mindestens einer hydraulisch betätigten Kupplung (1),
**dadurch gekennzeichnet, dass**
diese zur Durchführung eines Verfahrens nach mindestens einem der Ansprüche 1 bis 8 ausgebildet ist.

**10.** Vorrichtung nach Anspruch 9,
**dadurch gekennzeichnet, dass**
diese ein mit dem Versorgungsdruck ($p_V$) beaufschlagtes Regelventil (2) zur Weiterleitung eines einstellbaren Ansteuerdruckes ($p_K$) an eine Kupplung (1) aufweist, wobei das Regelventil (2) den Versorgungsdruck unvermindert zur Kupplung (1) weiterleiten kann.

Fig. 1

$$p_H = p_{KA} + |M_{mot}| \cdot f_V$$

Fig. 2

Fig. 3

Fig. 4

$p_K$

1

$S$

2

$p_V$

3

Fig. 5

$p_K$

1

$S$

2

5

$p_{St}$  $p_V$  3

Fig. 6

**Europäisches**
**Patentamt**

## EUROPÄISCHER RECHERCHENBERICHT

**Nummer der Anmeldung**

EP 03 10 2534

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 400 678 A (JAIN PRAMOD K ET AL) 28. März 1995 (1995-03-28) | 1-5,7-10 | F16H61/00 |
| Y | * das ganze Dokument * | 6 | |
| X | US 4 365 526 A (HAMADA HIDEO ET AL) 28. Dezember 1982 (1982-12-28) | 1,3,6-10 | |
| Y | * das ganze Dokument * | 6 | |
| X | US 2001/034285 A1 (KONDO KAORU ET AL) 25. Oktober 2001 (2001-10-25) * das ganze Dokument * | 1-5 | |
| X | US 5 458 545 A (ADAM ALLEN D ET AL) 17. Oktober 1995 (1995-10-17) * das ganze Dokument * | 1-3,9,10 | |
| | | | **RECHERCHIERTE SACHGEBIETE (Int.Cl.7)** F16H |

Der vorliegende Recherchenbericht wurde für alle Patentansprüche erstellt

| Recherchenort | Abschlußdatum der Recherche | Prüfer |
|---|---|---|
| MÜNCHEN | 20. November 2003 | Vogt-Schilb, G |

**EP 1 507 101 A1**

**ANHANG ZUM EUROPÄISCHEN RECHERCHENBERICHT**
**ÜBER DIE EUROPÄISCHE PATENTANMELDUNG NR.**      EP 03 10 2534

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5400678 | A | 28-03-1995 | KEINE | | |
| US 4365526 | A | 28-12-1982 | JP | 1287426 C | 31-10-1985 |
| | | | JP | 55155949 A | 04-12-1980 |
| | | | JP | 60010224 B | 15-03-1985 |
| US 2001034285 | A1 | 25-10-2001 | JP | 2001254820 A | 21-09-2001 |
| | | | DE | 10110920 A1 | 25-10-2001 |
| US 5458545 | A | 17-10-1995 | KEINE | | |

EPO FORM P0461

Für nähere Einzelheiten zu diesem Anhang : siehe Amtsblatt des Europäischen Patentamts, Nr.12/82

13